# EUROPÄISCHE PATENTANMELDUNG

(11) **EP 0 915 625 A1**
(43) Veröffentlichungstag der Anmeldung: **12.05.1999**
(21) Anmeldenummer: 97119662.1
(22) Anmeldetag: 10.11.1997
(51) Int. Cl.: H04Q 3/00

(54) **Zeichengabepunkt eines Zeichengabenetzes**

(71) Anmelder: SIEMENS AKTIENGESELLSCHAFT, 80333 München (DE)
(72) Erfinder: Gradschnig, Klaus, Dipl.-Ing., 82131 Gauting (DE)

(57) **Zusammenfassung**

Aufgabe der Erfindung ist es, eine Ausnutzung der speziellen Eigenschaften einzelner Zeichengabestrecken in einem Zeichengabenetz zu ermöglichen, ohne daß gesamte Zeichengabestreckenbündel diese speziellen Eigenschaften besitzen müssen. Diese Aufgabe wird durch eine feste Zuordnung zwischen einer Zeichengabestrecke mit den genannten speziellen Eigenschaften und einem bestimmten Wert des Zeichengabestreckenauswahlfeldes einer Zeichengabenachricht gelöst.

## Beschreibung

In einem Zeichengabenetzwerk für das ITU Zeichengabeverfahren Nr. 7 oder seiner regionalen und nationalen Varianten (wie z.B. ETSI ETS 300 008, ANSI T1.111, Deutsche Telekom 163TR72) werden die Zeichengabestrecken (signalling links), welche zwei Zeichengabepunkte (signalling points) verbinden, normalerweise zu Zeichengabestreckenbündel (signalling linksets) zusammengefaßt. Ist eine Zeichengabenachricht (MSU) nun über ein Zeichengabestreckenbündel zu übertragen, wird an Hand des im Zeichengabestreckenauswahlfeldes (signlling link selection) der Zeichengabenachricht enthaltenen Wertes vom MTP eine betimmte Zeichengabestrecke zur Übertragung ausgewählt.

Dabei wird vom Nachrichtentransferteil (Message Transfer Part MTP, siehe z.B. Q.701 bis Q.706), welcher für das Übertragen der Zeichengabenachrichten veranwortlich ist, sichergestellt, daß Zeichengabenachrichten mit identischem Zeichengabestreckenauswahlfeld normalerweise denselben Weg durch das Zeichengabenetz nehmen, sich also nicht überholen können. Dies geschieht dadurch, daß Zeichengabenachrichten mit einem bestimmten Wert im Zeichengabestreckenauswahlfeld zu einem bestimmten Ziel von dem MTP in einem gegebenen Zeichengabestreckenbündel immer über dieselbe Zeichengabestrecke gesendet werden, es also normalerweise eine Zeichengabestreckenbündel-bezogene (oder wenigsten zielbezogene) feste Zuordnung zwischen Zeichengabestreckenauswahlfeld und einer Zeichengabestrecke eines Zeichengabestreckenbündels gibt.

Von dieser festen Zuordnung wird abgewichen, wenn es zum Ausfall einer Zeichengabestrecke (oder eines Zeichengabestreckenbündels) kommt. In diesem Fall werden die Zeichengabenachrichten über Ersatz-Zeichengabestrecken oder Ersatz-Zeichengabestreckenbündel gesendet. Wenn eine oder mehrere ausgefallene Zeichengabestrecken wieder verfügbar werden, kann die ansonsten feste Zuordnung zwischen den Werten des Zeichengabestreckenauswahlfeldes und der für solche Zeichengabenachrichten zu verwendenden Zeichengabestrecke abgeändert werden (siehe Q.704, §4.2.2). D.h. die feste Zuordnung von Zeichengabeauswahlfeld zu einer bestimmten Zeichengabestrecke des Zeichengabebündels kann jetzt eine andere sein als vor dem Ausfall.

Weitere Informationen zur Auswahl eines bestimmten Zeichengabestreckenbündels und einer bestimmten Zeichengabestrecke an Hand des Zeichengabestreckenauswahlfeldes sind z.B. in Q.704 und Q.705 zu finden. Im speziellen folgt daraus, daß diese Zuordnung zwar gewissen Prinzipien unterliegt (eines ist z.B., daß eine möglichst gleiche Belastung der Zeichengabestrecke anzustreben ist), sonst aber in den einzelnen Zeichengabepunkten unabhängig von den Auswahlkriterien anderer Zeichengabepunkte ist.

Es kann also z.Zt. in einem Zeichengabenetz nicht davon ausgegangen werden, daß eine Nachricht mit einem bestimmten Wert im Zeichengabestreckenauswahlfeld in jedem auf ihrem Zeichengabeweg benutzten Zeichengabestreckenbündel einen bestimmte, vorher festgelegte Zeichengabestrecke nimmt (zwar kann ein Sender davon ausgehen, daß seine Nachrichten mit gleichem SLS den gleichen Weg nehmen, doch kann er normalerweise nicht wissen, daß z.B. eine Nachricht mit SLS=1 in jedem Linkset über den Link=1 gesendet wird, da die Zuordnung der SLS Werte zu den Links in jedem Knoten autonom erfolgen kann. Ferner kann man Beispiele angeben, bei denen es nach einem Ausfall von Links nicht möglich ist, die ursprüngliche Zuordnung von SLS Wert zu Link ohne "zusätzliche" eigentlich überflüssige Umverteilung der SLS-Werte zu erreichen. Daher auch die Bemerkung in Q.704, §4.2.2, daß dann eine "geänderte" feste Zuordnung möglich ist).

Damit ist es für einen Anwender und den MTP (des Zentralen Zeichengabeverfahrens Nr. 7 ) nicht möglich, spezielle Eigenschaften einzelner Zeichengabestrecken, welche über die allgemein vorhandenen Eigenschaften der Zeichengabestrecken in einem Zeichengabenetz hinausgehen, nutzbringend anzuwenden. Als Beispiel für eine solche Eigenschaft mag die Übertragungskapazität einer Zeichengabestrecke dienen. Gäbe es in einem Zeichengabestreckenbündel eine ausgezeichnete Zeichengabestrecke, welche eine wesentlich höhere Übertragungskapazität als die übrigen Zeichengabestrecken besäße, so könnte diese wegen des generellen Konzeptes der (möglichst) Gleichverteilung des Zeichengabeverkehrs über alle Zeichengabestrecken des Zeichengabestreckenbündels nicht ausgenutzt werden. Würde das Zeichengabestreckenbündel nämlich so mit Verkehr belastet werden, daß die Zeichengabestrecke mit der hohen Übertragungskapazität auch dementsprechend viel Verkehr trüge, würden die anderen Zeichengabestrecken des Zeichengabestreckenbündels wegen der vom MTP benutzten Methode zur Erzielung einer Gleichverteilung überlastet werden. Damit macht ein Betreiben eines Zeichengabestreckenbündels mit Zeichengabestrecken unterschiedlicher Eigenschaften wenig Sinn.

Aufgabe der Erfindung ist es nun, einen Zeichengabepunkt bzw. ein Verfahren anzugeben, mit dem eine Ausnutzung der speziellen Eigenschaften einzelner Zeichengabestrecken in einem Zeichengabenetz möglich wird, ohne daß gesamte Zeichengabestreckenbündel diese speziellen Eigenschaften besitzen müssen.

Diese Aufgabe wird durch einen Zeichengabepunkt gemäß Anspruch 1 bzw. ein Verfahren nach Anspruch 6 gelöst.

Im folgenden wird die Erfindung anhand des konkreten Beispieles der Ausnutzung von Zeichengabestrecken basierend auf Q.2210, Q.2240 und Q.2110 in einem ansonsten auf Q.701 bis Q.706 basierenden Netzwerk für die speziellen Belange des Zeichengabeverbindungssteuerungsteiles (SCCP, siehe z.B. Q.711 bis Q.715) näher beschrieben. Dabei wird davon ausgegangen, daß es aufgrund von Kosten- oder sonstigen Gründen Zeichengabestreckenbündel im Netzwerk gibt, welche sowohl S-AAL Zeichengabestrecken gemäß Q.2110 und Q.2140 als auch solche gemäß MTP Level 2 (Q.703) besitzen.

Der Zeichengabeverbindungssteuerungsteil wird insbesondere deshalb als Beispiel ausgewählt, weil er aufgrund seines Einsatzes der prädestinerte Nutznießer solch erweiterter Eigenschaften von Zeichengabestrecken (längere maximale Nachrichtenlänge, größere Übertragungskapazität) ist.

Um diesen Einsatz von leistungsfähigen Zeichengabestrecken zu ermöglichen und ihre Eigenschaften auszunützen, sind zwei Punkte zu beachten:
1. Im Falle, daß die erweiterte Kapazität in einem Zeichengabestreckenbündel auch verfügbar ist, sollte der für sie vorgesehene Verkehr auch über die entsprechende Zeichengabestrecke geleitet werden.
2. Sollte es zu einem Ausfall der die erweiterte Kapazität zur Verfügung stellenden Zeichengabestrecke(n) kommen, muß ggf. sichergestellt sein, daß der Verkehr - wenn u.U. auch mit gewissen Einschränkungen quantitativer Natur - prinzipiell weiter abgewickelt werden kann oder aber einer definierten Fehlerbehandlung zugeführt werden kann.

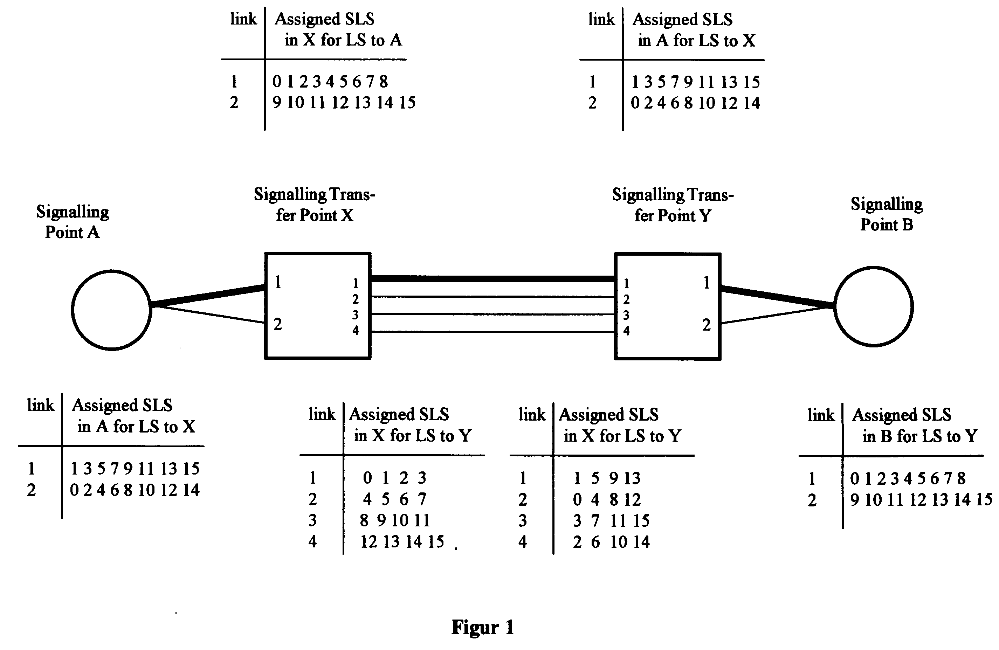

Der Lösungsweg für die genannten Punkte wird im folgenden anhand Figur 1 erläutert.

Figur 1 zeigt einen Netzwerkausschnitt (weitere Knoten und Zeichenabestecken wurden nicht dargestellt), in dem zwei Zeichengabepunkte (A und B) über zwei Zeichengabetransferpunkte (X und Y) miteinander verbunden sind. Ebenso dargestellt sind mögliche Zuordnungstabellen, welche den einzelnen Zeichengabestrecken (link) der Zeichengabestreckenbündel (LS) die über sie zu sendenden Werte des Zeichengabeauswahlfeldes (SLS) zuweisen. Man sieht, daß die ,SLS-Werte innerhalb eines LS gleichmäßig auf die Links verteilt sind, daß aber z.B. auf der Strecke von A nach B eine Nachricht mit SLS=2 im LS von A nach X Link 2, im LS von X nach Y link 1, und von Y nach B wiederum Link 1 benützt. Ferner soll in jedem der dargestellten LS der Link mit Nummer 1 ein durch besondere Kapazität ausgezeichneter sein.

### Lösung für 1.

Dazu werden erstens den Zeichengabestrecken, welche diese erweiterte Kapazität zur Verfügung stellen, in jedem Zeichengabestreckenbündel, in dem sie zur Anwendung kommen, im gesamten Zeichengabenetz die gleichen Werte des Zeichengabestreckenauswahlfeldes zugeordnet, z.B. der Wert 1, wenn es in solchen Zeichengabestreckenbündeln eine solche Zeichengabestrecke vorhanden ist (die genannte Zuordnung erfolgt bei Inbetriebnahme der Zeichengabestrecke mit der erweiterten Kapazität, entweder über ein zentrales Administrationzentrum oder aber durch individuelle Administration in den betroffenen Knoten).

Zum zweiten wird der Nachrichtentransferteil dahingehend eingeschränkt, daß er für solche Zeichengabestreckenbündel die Zuordnung zwischen Zeichengabestrecke und Wert des Zeichengabestreckenauswahlfeldes im Normalbetrieb (d.h. kein Ausfall dieser speziellen Zeichengabestrecke ) konstant hält bzw. nach Ausfall und Wiederinbetriebnahme dieser speziellen Zeichengabestrecke ihr zumindest wieder die ausgezeichnenten Werte des Zeichengabestreckenauswahlfeld zuordnet.

Drittens wird der diese Erweiterung nutzende Anwender (z.B. SCCP, Q.711 bis Q.715) des Nachrichtentransferteiles dahingehend erweitert, daß er den Wert des Zeichengabestreckenauswahlfeldes für Zeichengabenachrichtenströme, welche von der erweiterten Kapazität profitieren können, dementsprechend auswählt (der Anwender kennt also die genannte Zuordnung aufgrund administrativer Konfigurationsdaten, welche wiederum über ein zentrales Administrationzentrum oder aber durch individuelle Administration in den betroffenen Knoten eingebracht werden.

### Lösung für 2.

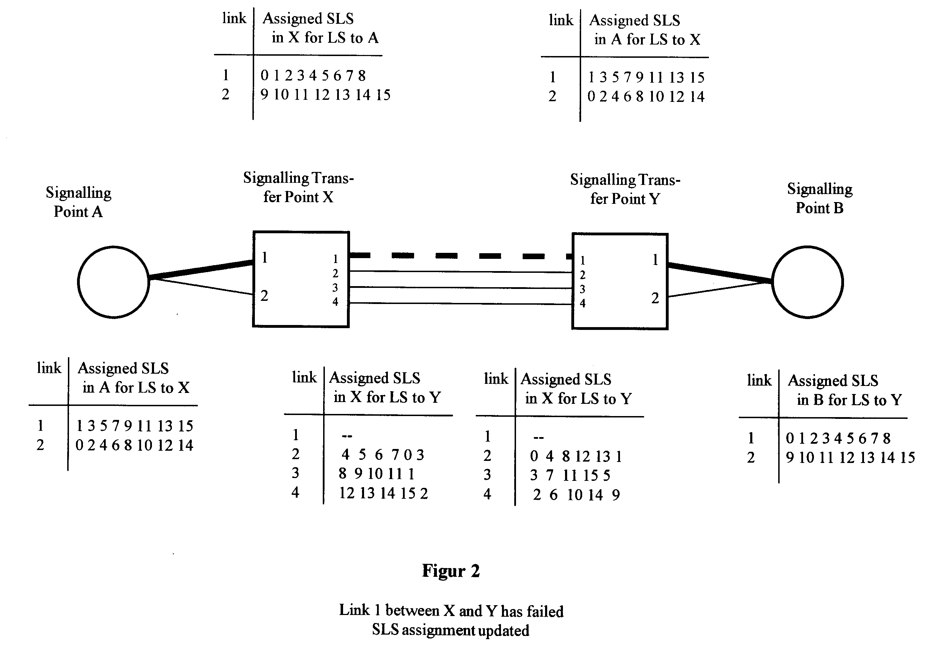

Figur 2 zeigt beispielhaft eine Situation, in der der Link mit der erhöhten Kapazität (beispielhaft gemäß Q.2110 und Q.2140) zwischen X und Y ausgefallen ist. Eine Nachricht, die diese erhöhte Kapazität benötigt, z.B. aufgrund ihrer Länge, kann nun nicht mehr ohne weiteres zwischen X und Y übertragen werden.

Sollte für dieses Problem keine Lösung benötigt werden, weil man etwa darauf verzichten will, das Netz in diesem Falle mit dem speziellen Verkehr zu belasten, können betroffene Zeichengabenachrichten einfach verworfen werden. Anderenfalls kann eine mögliche Lösung des Interworkingproblems für den Zeichengabeverbindungssteuerungsteil zwischen Breitband- und Schmalbandzeichengabenetzwerk(teilen) erweitert werden. Diese bekannte Lösung funktioniert derart, daß, wenn der Nachrichtentransferteil in einem Knoten, der das Interworking zwischen Breitband- und Schmalbandnetzen abwickelt, eine Nachricht des SCCP erkennt, welche nicht über das Schmalbandnetz übertragen werden kann, stellt er sie dem lokalen SCCP zu, obwohl diese Nachricht für einen anderen Zeichengabepunkt bestimmt ist.

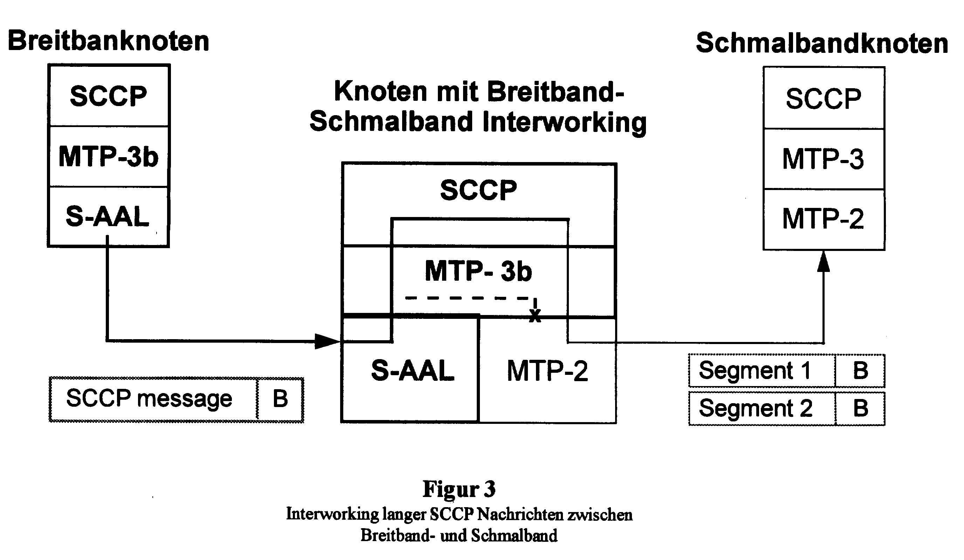

Der lokale SCCP hat dann die Möglichkeit, diese Nachricht entsprechend zu segmentiern, sodaß sie auch über das Schmalbandnetz übertragen werden kann (Figur 3).

Diese Methode wird nun dahingehend erweitert, daß, wenn der Nachrichtentransferteil eine Nachricht erkennt, welche die erweiterte Kapazität benötigt, ohne daß eine entsprechende Zeichengabestrecke verfügbar ist, er sie dem lokal betroffenen Anwender des Nachrichtentransferteiles zustellt, obwohl diese Nachricht für einen anderen Zeichengabepunkt bestimmt ist.

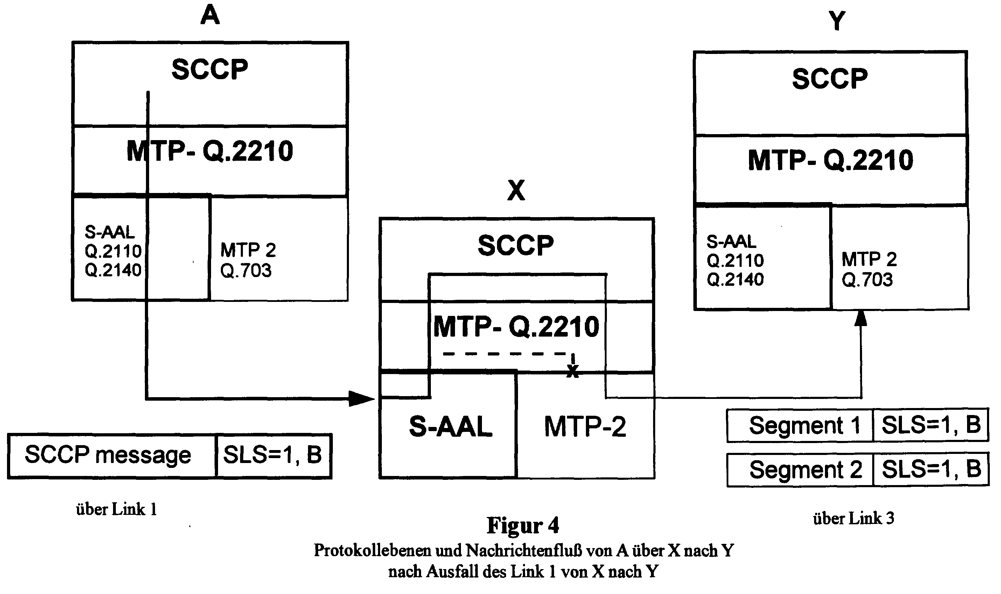

Der lokale Anwender hat dann die Möglichkeit, diese Nachricht entsprechend umzuformen, sodaß sie auch mit den bestehenden Möglichkeiten übertragen werden kann (siehe Figur 4). Die genannte Umformung durch den Zeichengabeverbindungssteuerungsteil kann z.B. darin bestehen, daß er eine zu lange Nachricht segmentiert.

Alternativ könnte der lokale Anwender auch eine Fehlerbehandlung einleiten. Der SCCP könnte z.B. bei Bedarf die Return on Error Procedure durchführen (also eine (L)UDT Servicenachricht (L)UDTS) an den Ursprung der Nachricht zurücksenden) (siehe z.B. Q.711 bis Q.715).

## Patentansprüche

1. Zeichengabepunkt eines Zeichengabenetzes, mit
einem Nachrichtentransferteil gemäß Zentralem Zeichengabesystem Nummer 7
**dadurch gekennzeichnet,** daß
der Zeichengabepunkt dem Nachrichtentransferteil (MTP) eine feste Zuordnung zwischen einer Zeichengabestrecke mit speziellen Eigenschaften, welche nicht alle Zeichengabestrecken eines Zeichengabestreckenbündels besitzen, und einem bestimmten Wert des Zeichengabestreckenauswahlfeldes einer Zeichengabenachricht vorgibt.

2. Zeichengabepunkt nach Anspruch 1,
**dadurch gekennzeichnet,** daß
er die genannte Zuordnung bei Inbetriebnahme bzw. nach Ausfall und Wiederinbetriebnahme der Zeichengabestrecke mit den genannten speziellen Eigenschaften vorgibt.

3. Zeichengabepunkt nach einem der Ansprüche 1 oder 2,
**gekennzeichnet durch**
einen Anwender des Nachrichtentransferteiles, der bei bestimmten Nachrichtentypen von den speziellen Eigenschaften der genannten Zeichengabestrecken profitiert, indem er das Zeichengabestreskenauswahlfeld von Nachrichten dieser Nachrichtentypen mit den entsprechenden Werten versorgt.

4. Zeichengabepunkt nach einem der Ansprüche 1 bis 3,
**dadurch gekennzeichnet,** daß
der Nachrichtentransferteil (MTP) eine Zeichengabenachricht, die er aufgrund des Wertes ihres Zeichengabestreckenauswahlfeldes auf eine Zeichengabestrecke mit den genannten speziellen Eigenschaften weiterleiten müßte, der lokalen Instanz des Anwenders zur weiteren Bearbeitung übergibt, wenn der Wert ihres Zeichengabestreckenauswahlfeldes (zur Zeit) keine entsprechende Zeichengabestrecke identifiziert.

5. Zeichengabepunkt nach Anspruch 4,
**dadurch gekennzeichnet,** daß
die lokale Instanz des Anwenders eine vom Nachrichtentransferteil wegen Nichtweiterleitbarkeit erhaltene Nachricht umformt und dem Nachrichtentransferteil wieder zur Weiterleitung zurückgibt.

6. Zeichengabepunkt nach Anspruch 4,
**dadurch gekennzeichnet,** daß
die lokale Instanz des Anwenders eine Fehlerbehandlung einleitet, wenn sie vom Nachrichtentransferteil eine nichtweiterleitbare Nachricht erhält.

7. Verfahren zur Behandlung von Zeichengabenachrichten, das in einem Zeichengabepunkt mit einem Nachrichtentransferteil gemäß Zentralem Zeichengabesystem Nummer 7 abläuft, demgemäß
dem Nachrichtentransferteil (MTP) eine feste Zuordnung zwischen einer Zeichengabestrecke mit speziellen Eigenschaften, welche nicht alle Zeichengabestrecken eines Zeichengabestreckenbündels besitzen, und einem bestimmten Wert des Zeichengabestreckenauswahlfeldes einer Zeichengabenachricht vorgegeben wird.

8. Verfahren nach Anspruch 7,
**dadurch gekennzeichnet,** daß
die genannte Zuordnung bei Inbetriebnahme bzw. nach Ausfall und Wiederinbetriebnahme der Zeichengabestrecke mit den genannten speziellen Eigenschaften vorgegeben wird.

9. Verfahren nach einem der Ansprüche 7 oder 8,
**dadurch gekennzeichnet,** daß
eine Zeichengabenachricht, die von dem Nachrichtentransferteil (MTP) aufgrund des Wertes ihres Zeichengabestreckenauswahlfeldes auf eine Zeichengabestrecke mit den genannten speziellen Eigenschaften weitergeleitet werden müßte, der lokalen Instanz des Anwenders zur weiteren Bearbeitung übergeben wird, wenn anhand des Wert ihres Zeichengabestreckenauswahlfeldes (zur Zeit) keine entsprechende Zeichengabestrecke identifiziert werden kann.

10. Verfahren nach Anspruch 9,
**dadurch gekennzeichnet,** daß
von der lokalen Instanz des Anwenders eine vom Nachrichtentransferteil wegen Nichtweiterleitbarkeit erhaltene Nachricht umgeformt und dem Nachrichtentransferteil wieder zur Weiterleitung zurückgegeben wird.

11. Verfahren nach Anspruch 9,
**dadurch gekennzeichnet,** daß
von der lokalen Instanz des Anwenders eine Fehlerbehandlung eingeleitet wird, wenn sie vom Nachrichtentransferteil eine nichtweiterleitbare Nachricht erhält.
